(19) Europäisches Patentamt / European Patent Office / Office européen des brevets

(11) **EP 2 211 071 B1**

(12) **EUROPÄISCHE PATENTSCHRIFT**

(45) Veröffentlichungstag und Bekanntmachung des Hinweises auf die Patenterteilung:
**14.03.2018 Patentblatt 2018/11**

(21) Anmeldenummer: **10000584.2**

(22) Anmeldetag: **21.01.2010**

(51) Int Cl.:
*F16D 66/00* *(2006.01)*          *F16D 65/14* *(2006.01)*
*B60T 13/66* *(2006.01)*          *F16D 55/224* *(2006.01)*

(54) **Verfahren zum Steuern einer druckluftbetätigten Scheibenbremse mit Selbstverstärkung und eine entsprechende Scheibenbremse**

Method for controlling a pressurised air-actuated disc brake with self-reinforcement and a corresponding disc brake

Procédé de commande d'un frein à disque à air comprimé doté d'une auto-amplification et un frein à disque correspondant

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **21.01.2009 DE 102009005470**

(43) Veröffentlichungstag der Anmeldung:
**28.07.2010 Patentblatt 2010/30**

(73) Patentinhaber: **KNORR-BREMSE Systeme für Nutzfahrzeuge GmbH**
**80809 München (DE)**

(72) Erfinder:
• **Geissler, Steffen**
  **63512 Hainburg (DE)**
• **Baumgartner, Johann**
  **85368 Moosburg (DE)**

(74) Vertreter: **Mattusch, Gundula**
**C/o Knorr-Bremse AG**
**Moosacherstrasse 80**
**80809 München (DE)**

(56) Entgegenhaltungen:
DE-A1- 10 151 950          DE-A1- 10 201 555
DE-A1-102006 015 032          DE-A1-102006 051 965

**Beschreibung**

Die Erfindung betrifft ein Verfahren zum Steuern einer druckluftbetätigten Scheibenbremse mit Selbstverstärkung.

Druckluftbetätigte Scheibenbremsen, wie sie in schweren Nutzfahrzeugen zur Anwendung kommen, werden über den Betätigungsdruck gesteuert. Dies kann über eine mechanisch/pneumatische Ventilsteuerung erfolgen, bei welcher der Fahrer über ein in der Regel fußbetätigtes Ventil den Bremsdruck einsteuert, oder bei fortschrittlichen Bremsanlagen über eine elektronische Steuerung, bei welcher der Fahrer bei der Betätigung des Bremspedals über einen elektrischen Sollwertgeber seinen Verzögerungs- bzw. Abbremsungswunsch vorgibt und die elektronische Steuerung die gewünschte Verzögerung/Abbremsung realisiert indem über Magnetventile der notwendige Bremsdruck eingesteuert wird.

Zur feinfühligen Regelung dieses Vorganges wird der Bremsdruck über elektronische Drucksensoren kontrolliert. Magnetventile und Drucksensoren sind zusammen mit der zugehörigen Steuerelektronik in einem Gehäuse eines so genannten Druckmoduls zusammengefasst und mit diesem Gehäuse in der Regel an einem geschützten Ort am Fahrzeugrahmen befestigt. Aufgabe des Druckmoduls ist es, die von einer zentralen, so genannten EBS-Elektronik erhaltenen Bremskraftvorgaben durch entsprechende Druckbeaufschlagung der Radbremszylinder zu realisieren. Diese Art der Bremsdruckregelung arbeitet sehr zuverlässig und stellt die Standard-Bremsenausrüstung von z.B. modernen Schwerlastwagen dar.

Scheibenbremsen, welche zur Reduzierung der Betätigungsenergie Selbstverstärkungseffekte nutzen, benötigen ein unabhängiges Signal über die erzielte Spannkraft oder Bremskraft, da der Zusammenhang zwischen Bremskraft und Betätigungskraft sehr stark durch Reibwertschwankungen der Bremsbeläge beeinflusst wird. Bei selbstverstärkenden elektromechanischen Scheibenbremsen wird üblicherweise eine Sensierung der Zuspannkraft angewendet. Hierzu werden im Kraftfluss der Bremse angeordnete Sensoren verwendet, welche aufgrund ihrer Anordnung an oder in der Bremse hohen Umgebungsbeanspruchungen ausgesetzt sind und somit eine hohe Störanfälligkeit aufweisen.

Bei druckluftbetätigten Scheibenbremsen mit Selbstverstärkung ist der störende Einfluss der Reibwertstreuung der Bremsbeläge in gleicher Weise wirksam.

Das Dokument DE 10 2006 015032 A1 beschreibt ein Verfahren und eine Recheneinheit zur Bestimmung eines Reibungskoeffizienten einer selbstverstärkenden Bremse mit einem ersten Bremselement, das von einem eine Aktuatorkraft erzeugenden Aktuator mit einem zweiten Bremselement zum Erzeugen einer Reibkraft und eines Reibmoments in Wechselwirkung bringbar ist, wobei eine Abhängigkeit einer zwischen dem ersten und dem zweiten Bremselement wirkenden Normalkraft von der Aktuatorkraft und dem Reibungskoeffizienten besteht, mit folgenden Schritten: Bestimmen eines funktionalen Zusammenhangs zwischen dem Reibungskoeffizienten und Komponenten der Normalkraft und Komponenten der Aktuatorkraft, Bestimmen der Komponenten der Aktuatorkraft, Bestimmen der Komponenten der Normalkraft und Bestimmen des Reibungskoeffizienten aus dem funktionalen Zusammenhang, den bestimmten Komponenten der Aktuatorkraft und den bestimmten Komponenten der Normalkraft.

Es ist daher die Aufgabe der vorliegenden Erfindung, ein verbessertes Verfahren zum Steuern einer druckluftbetätigten Scheibenbremse mit Selbstverstärkung zu schaffen, deren Regelung trotz des störenden Einflusses der Reibwertstreuung der Bremsbeläge über eine Steuerung des Bremsdruckes möglich ist.

Die Aufgabe wird durch ein Verfahren mit den Merkmalen des Anspruchs 1 sowie des Anspruchs 11 gelöst.

Die Lösung besteht in einem Steuerungskonzept, bei welchem die Steuerung des Bremsvorganges wie bei konventionellen druckluftbetätigten Bremsen (ohne Selbstverstärkung) über eine Regelung des Bremsdruckes erfolgt und über einen sehr einfachen und robusten Sensor ein der Spannkraft proportionales Signal erzeugt wird, welches dazu dient, Reibwert-Veränderungen zu erkennen und daraufhin Korrekturen im Regelalgorithmus der Steuerelektronik mittels Veränderung von Steuerungsparametern derselben auszulösen.

Der Vorteil dieser Lösung besteht darin, dass die bewährte Drucksteuerung der Bremse beibehalten und die Selbstverstärkung dennoch nutzbar gemacht wird, indem der störende Einfluss von Reibwertveränderungen durch Veränderung von Steuerungsparametern kompensiert wird. Bei Ausfall eines Spannkraftsensors bleibt das System voll funktionsfähig. Als erste Maßnahme kann in einem solchen Fall der an den weiteren Bremsen - insbesondere der an der zweiten Bremse der betroffenen Achse - ermittelte Reibwertzustand herangezogen werden. Selbst bei Ausfall aller Spannkraftsensoren bleibt die Bremsanlage mit Einschränkungen voll funktionsfähig.

Demgemäß weist ein Verfahren zum Steuern einer druckluftbetätigten Scheibenbremse mit Selbstverstärkung und einem Steuergerät zur Regelung eines Bremsdrucks mit folgende Verfahrensschritten auf: Empfangen eines Abbremssollwertes; Ermitteln eines erforderlichen Solldrucks anhand des Abbremssollwertes; Ermitteln eines aktuellen Reibwerts zwischen Bremsbelägen und einer Bremsscheibe der Scheibenbremse und Bilden einer Reibwertabweichung des aktuellen Reibwerts von einem Nennreibwert; Anpassen des erforderlichen Solldrucks anhand der Reibwertabweichung; und Steuern der Scheibenbremse durch Regeln des Bremsdrucks mit dem so angepassten Solldruck.

Eine Anpassung an eine aktuelle Bremsbelagtemperatur ergibt den Vorteil einer Anpassung des Sensorsignals an den wichtigen Parameter Temperatur.

Bei einem Verfahren zum Steuern einer Bremsanlage eines Fahrzeugs mit zumindest zwei Rädern auf einer Achse, wobei die zumindest zwei Räder jeweils zumindest eine druckluftbetätigte Scheibenbremse mit Selbstverstärkung, die mittels des oben genannten Verfahrens gesteuert wird, aufweisen, wird bei einem Ausfall eines Ermittelns eines aktuellen Reibwertes zumindest einer der zumindest zwei druckluftbetätigten Scheibenbremsen der ermittelte aktuelle Reibwert der anderen der zumindest zwei druckluftbetätigten Scheibenbremsen verwendet.

Da es zur Kompensation der Reibwertstreuungen darum geht, Veränderungen der Belagreibwerte bzw. Abweichungen derselben an den einzelnen Bremsen, besonders an den beiden Bremsen jeweils einer Achse, zu erkennen, ist es nicht notwendig den Absolutwert der Spannkraft genau zu ermitteln, sondern es ist ausreichend, relative Veränderungen bzw. Abweichungen mehrerer Bremsen untereinander zu erfassen.

Der aktuelle Reibwert kann durch zumindest einen Bremsvorgang ermittelt oder auch bei einem einzigen Bremsvorgang mehrmals ausgewertet werden.

Dann wird der aktuelle Reibwert durch Vergleichen eines aktuellen Sensorsignals einer Spannkraft der Scheibenbremse mit einem Sensorsignal der Spannkraft der Scheibenbremse ohne Selbstverstärkung ermittelt. Hierbei wird das aktuelle Sensorsignal anhand einer Erfassung einer Aufweitung eines Bremssattels der Scheibenbremse in Abhängigkeit von der Spannkraft gebildet.

Das Sensorsignal ohne Selbstverstärkung wird anhand einer Kennlinie gebildet. Dazu wird eine Kennlinie der Bremse ohne wirksame Selbstverstärkung ermittelt. Diese Kennlinie stellt den Zusammenhang zwischen Sensorsignal, und damit der Spannkraft der Bremse und dem eingesteuerten Druck ohne Selbstverstärkung dar. Basierend auf dieser hinterlegten Kennlinie kann nun durch den Vergleich des Sensorsignals ohne Selbstverstärkung mit dem tatsächlichen Sensorsignal der aktuelle Reibwert bestimmt werden. Mit Hilfe des berechneten Reibwerts kann dann der eingesteuerte Druck für eine bestimmte Soll-Verzögerung bei Reibwertänderungen angepasst werden

Die gespeicherte Kennlinie kann weiterhin eine Abhängigkeit des Sensorsignals von einer Steifigkeit des Bremssattels und Steifigkeit und Verschleiß von Bremsbelägen der Scheibenbremse aufweisen.

Das so erzeugte bzw. berechnete Sensorsignal ohne Selbstverstärkung kann weiterhin anhand aktueller Werte von Steifigkeit und Verschleiß der Bremsbeläge der Scheibenbremse angepasst werden, indem die aktuellen Werte in die Berechnung mit einbezogen werden.

Es ist auch möglich, dass die gespeicherte Kennlinie an aktuelle Werte angepasst wird. Dabei bleiben konstante Werte gespeichert, wie zum Beispiel die Steifigkeit des Bremssattels und eines Bremsbelagträgers. Die Steifigkeit des Bremsbelags und dessen Verschleiß jedoch können anhand der aktuellen Werte geändert gespeichert werden und somit für weitere Bremsungen als Ausgangswerte dienen.

Das oben beschriebene Verfahren kann bei einer druckluftbetätigten Scheibenbremse zur Anwendung kommen, die jedoch nicht Gegenstand der vorliegenden Erfindung sondern Gegenstand einer selbständigen Erfindung ist. Eine solche beispielhafte Scheibenbremse wird im Folgenden kurz beschrieben.

Eine solche druckluftbetätigte Scheibenbremse mit Selbstverstärkung umfasst zumindest ein Steuergerät, in einem die Bremsscheibe übergreifenden Bremssattel beidseitig einer Bremsscheibe angeordnete Bremsbeläge, welche mittels eines mit dem Bremssattel verbundenen Belaghaltebügels gesichert und mittels zumindest eines Bremszylinders mit einer Spannkraft beaufschlagbar sind. Diese Scheibenbremse weist zumindest eine Messeinrichtung zur Erfassung einer Aufweitung des Bremssattels durch die Spannkraft zur Ermittlung eines aktuellen Reibwertes der Scheibenbremse durch das Steuergerät auf.

Der Sensor erfasst die Verschiebung des Belaghaltebügels durch die Sensierung eines Messarms mit zumindest einem Kontaktabschnitt.

Neben dem Hall-Sensor hat sich als besonders geeignete Messmethode das Wirbelstrom-Prinzip herausgestellt. Im einfachsten Fall ist hierzu nur eine stationär angeordnete Magnetspule erforderlich, welche im geeignet ausgebildeten Endbereich des Belaghaltebügels Wirbelströme induziert. Dieses Messprinzip arbeitet berührungslos und bietet bei geringen Abmessungen einen ausreichend großen linearen Messbereich. Die elektronische Schaltung zur Signalaufbereitung und -verstärkung kann an der Sensorspule angeordnet werden oder in Kombination mit der Verstärkerschaltung des Verschleißsensors im Bremsengehäuse. Prinzipiell kann der Sensor die Verschiebung durch ein kontaktierendes Element oder kontaktlos erfassen.

Das Steuergerät kann Folgendes aufweisen: einen Abgleichblock Abbremsung zum Empfang eines Sollabbremswertes und eines Zustellwertes und zur Ausgabe eines Zustellsollwertes; einen Ermittlungsblock Solldruck zum Empfang des Zustellsollwertes, eines Istdruckwertes eines Druckmoduls der Scheibenbremse und eines Reibwertes) und zur Ausgabe eines Solldruckwertes an das Druckmodul; einen Berechnungsblock Reibwert zum Berechnen und Ausgabe des Reibwertes aus einem Vergleich eines aktuellen Sensorsignals mit einem Sensorsignal ohne Selbstverstärkung; einen Kennlinienblock Sensorsignal zur Berechnung des Sensorsignals ohne Selbstverstärkung anhand einer gespeicherten Kennlinie der Scheibenbremse und aktueller Werte der Scheibenbremse. Dabei kann der Kennlinienblock Sensorsignal zum Empfang der aktuellen Werte der Scheibenbremse mit einem Verschleißsensor der Scheibenbremse und/oder einem Temperaturmodellblock verbunden sein.

Die Erfindung wird nun anhand von Ausführungsbeispielen mit Bezug auf die beigefügten Zeichnungen näher erläutert. Hierbei zeigt:

Fig. 1    eine perspektivische Teilansicht einer beispielhaften Ausführung einer Scheibenbremse zur Durchführung eines erfindungsgemäßen Verfahrens;

Fig. 2    eine perspektivische, vergrößerte Teilansicht aus einem anderen Blickwinkel nach Fig. 1;

Fig. 3    eine perspektivische, vergrößerte Teilansicht einer Messeinrichtung in einer ersten Ausführung;

Fig. 4    eine perspektivische, vergrößerte Teilansicht der Messeinrichtung in einer zweiten Ausführung;

Fig. 5    ein Blockschaltbild einer Regelung des erfindungsgemäßen Verfahrens;

Fig. 6    ein Diagramm zur Erläuterung eines Zusammenhangs zwischen Spannkraft und Reibwert;

Fig. 7    eine grafische Darstellung von Drücken in Abhängigkeit von einem Reibwert;

Fig. 8    eine grafische Darstellung von Druckkorrekturen in Abhängigkeit von unterschiedlichen Reibwertabweichungen;

Fig. 9    ein Diagramm eines Sensorsignals in Abhängigkeit von einem Bremszylinderdruck;

Fig. 10    eine grafische Darstellung einer Gesamtsteifigkeit in Abhängigkeit von einem Verschleiß;

Fig. 11    ein Diagramm eines Temperaturfaktors in Abhängigkeit von einer Temperatur; und

Fig. 12    ein Blockschaltbild der Regelung des erfindungsgemäßen Verfahrens mit einer Solldruckermittlung.

Gleiche Bauelemente bzw. Funktionseinheiten mit gleicher Funktion sind mit gleichen Bezugszeichen in den Figuren gekennzeichnet.

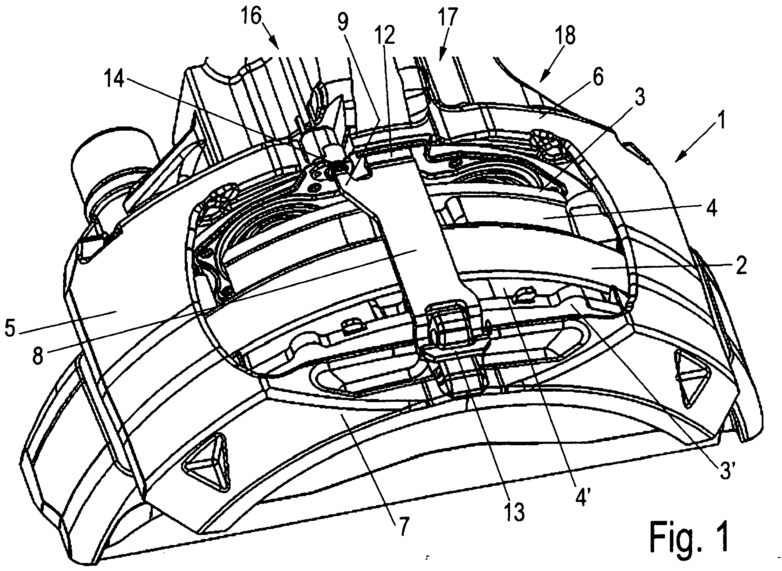

Fig. 1 zeigt eine perspektivische Teilansicht einer beispielhaften Ausführung einer Scheibenbremse 1 zur Durchführung eines erfindungsgemäßen Verfahrens.

Ein Bremssattel 5 übergreift eine Bremsscheibe 2 und ist mit einem Belaghaltebügel 8 versehen, welcher zwei beidseitig der Bremsscheibe 2 angeordnete Bremsbelagträger 3, 3' mit Bremsbelägen 4, 4' hält. Der zuspannseitige Bremsbelag 4 der Beläge 4, 4' wird über einen hier nicht im Detail erkennbare Bremszylinder und eine diesem nachgeschaltete Zuspanneinheit, vorzugsweise mit einem Drehhebel mit einer Zuspannkraft beaufschlagt, wobei sich vorzugsweise der Bremsbelag in Umfangsrichtung bewegen kann und dabei an einer Keil- oder Rampenfläche abstützt, so dass eine Selbstverstärkungswirkung erzielt wird (siehe z.B. die DE 10 2006 029 942 A1, die ein solches Prinzip an einer Scheibenbremse zeigt, bei welcher anstelle eines Bremszylinders eine Spindeleinheit auf den Drehhebel einwirkt).

Der Belaghaltebügel 8 ist mit einem Belaghaltebügelendabschnitt 12 an einer Bremssattelinnenseite 6 des Bremssattels 5 längsverschiebbar angebracht. An der anderen Seite ist der Belaghaltebügel 8 mit einer Belaghaltebügelbefestigung 13 an dem Bremssattel 5 an einer Bremssattelaußenseite 7 befestigt. Der Belaghaltebügel 8 ist an seinem längsverschieblichen Belaghaltebügelendabschnitt 12 mit einem parallel zur Längsachse des Belaghaltebügels 8 verlaufenden Messarm 9 ausgebildet. Das freie Ende des Messarms 9 steht mit einem Sensor 14 in Wirkverbindung und bildet mit diesem eine Messeinrichtung 16, welche eine Längsverschiebung des Belaghaltebügels 8 (in Richtung der Zuspannkraft bzw. der Achse der Bremsscheibe 2), die durch eine Aufweitung des Bremssattels 5 durch die Zuspannkraft bewirkt wird, erfasst.

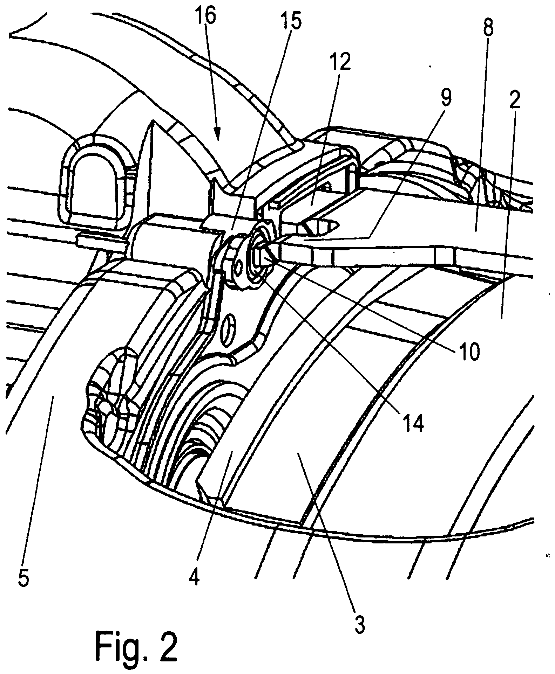

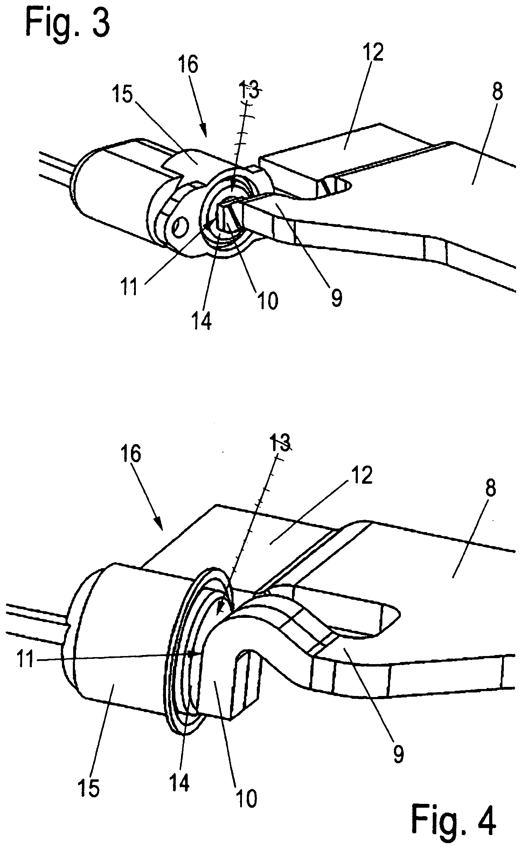

In Fig. 2 ist in einer perspektivischen, vergrößerten Teilansicht aus einem anderen Blickwinkel nach Fig. 1 die Messeinrichtung 16 dargestellt. Der Sensor 14 ist in einem Sensorgehäuse 15 angeordnet, welches am Bremssattel 5, d.h. an der Bremssattelinnenseite 6, angebracht ist. Der Messarm 9 weist an seinem freien Ende einen Kontaktabschnitt 10 auf, welcher in Wirkverbindung mit einer freien Fläche des Sensors 14 steht. Diese Wirkverbindung ist in Fig. 3 in einer perspektivischen, vergrößerten Teilansicht der Messeinrichtung 16 in einer ersten Ausführung illustriert.

Hierbei weist liegt der Kontaktabschnitt 10 mit einer Kontaktabschnittsfläche 11, die zum Sensor 14 weist, auf der freien Fläche des Sensors 14 mechanisch kontaktierend auf. Eine Längsbewegung des Belaghaltebügels 8 wird als Längsbewegung des Messarms 9 über die Kontaktabschnittsfläche 11 auf den Sensor 14 mechanisch übertragen und somit erfasst. Der Sensor 14 ist zum Beispiel ein induktiver Wegsensor mit integrierter Signalaufbereitung und -verstärkung. Der Kontaktabschnitt 10 kann aus dem gleichen Material wie der Belaghaltebügel 8 oder aus einem anderen Werkstoff, zum Beispiel aufgeklebt auf das freie Ende des Messarms 9, sein. Andere Versionen sind selbstverständlich möglich.

Eine zweite Ausführung der Messeinrichtung 16 zeigt Fig. 4. In dieser zweiten Ausführung ist der Kontaktabschnitt 10 des Messarms 9 umgebogen und kontaktiert den Sensor 14 mit seiner Kontaktabschnittsfläche 11 nicht. Diese kontaktlose Wirkverbindung kann zum Beispiel mit einem Sensor 14 ausgebildet sein, welcher ein Hall-Sensor ist. Dabei ist der Kontaktabschnitt 10 zum Beispiel ein Magnet. Auch eine Ausbildung nach dem Wirbelstromprinzip ist möglich. Dabei weist der Sensor 14 zum Beispiel eine Spule auf, deren Eigenschaften durch den Kontaktabschnitt 10 in Abhängigkeit von seiner Längsstellung veränderbar und entsprechend messbar sind.

Der Sensor 14 erfasst die Aufweitung des Bremssattels 5 in Abhängigkeit von der Zuspannkraft, die im Weiteren auch als Spannkraft $F_N$ bezeichnet wird, und ist somit in erster Näherung linear zur Spannkraft $F_N$ der Scheibenbremse 1.

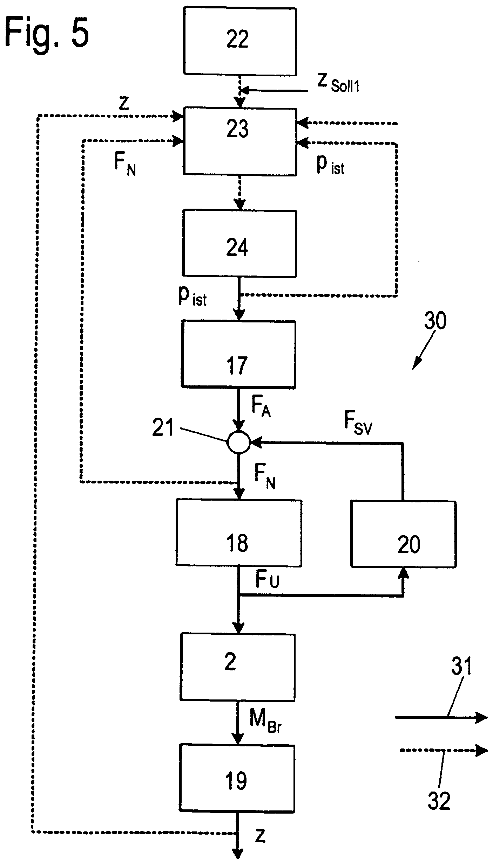

Fig. 5 stellt ein Blockschaltbild einer Regelung 30 des erfindungsgemäßen Verfahrens dar. Die durchgezogenen Linien symbolisieren Energieflüsse 31 und die gestrichelten Linien Signalflüsse 30.

Mittels eines Pedalmoduls wird durch einen Fahrer eines Fahrzeugs, in welchem die Scheibenbremse 1 eingebaut ist, eine Sollabbremsung $z_{soll1}$ erzeugt und an ein Steuergerät 23 geleitet. Das Steuergerät ist mit weiteren Eingangsgrößen beaufschlagt: Ein Istwert einer Zustellung bzw. Abbremsung z der Scheibenbremse 1, ein Verschleißwert x eines nicht gezeigten Verschleißsensors, und ein Istdrucks $p_{ist}$, der von einem Druckmodul 24 aufgrund eines Ausgangssignals des Steuergerätes 23 erzeugt wird. Außerdem wird dem Steuergerät 23 die Spannkraft $F_N$ der Scheibenbremse 1 zugeleitet. Dies erfolgt mittels des Sensors 14 als ein der Spannkraft $F_N$ proportionales Signal. Weiter unten wird dies noch ausführlicher erläutert.

Der Istdruck des Druckmoduls 24 wird dem Bremszylinder zugeführt, welcher eine Zylinderkraft $F_A$ erzeugt, die in einer Differenzbildung 21 mit einer Selbstverstärkungskraft $F_{SV}$ aus einem Selbstverstärkungsmechanismus 20 der Scheibenbremse 1 verarbeitet wird. Die Differenzbildung 21 erzeugt die Spannkraft $F_N$, welche auf die Bremseinheit 18 aufgebracht wird. Eine weitere Kraft $F_u$ wird auf den Selbstverstärkungsmechanismus 20 und die Bremsscheibe 2 aufgebracht, wodurch sich ein Bremsmoment $M_{Br}$ ergibt, das schließlich an einem zugeordneten Fahrzeugrad die Abbremsung z hervorbringt.

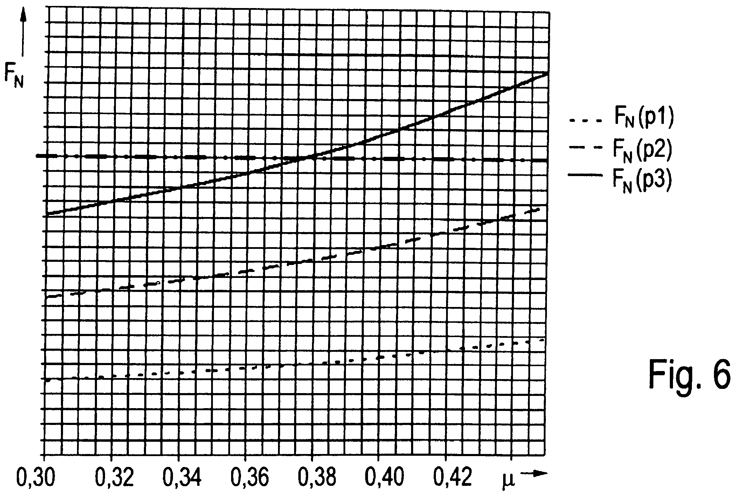

In Fig. 6 ist der Einfluss des Reibwerts auf die Spannkraft in einem Diagramm zur Erläuterung eines Zusammenhangs zwischen Spannkraft $F_N$ und Reibwert $\mu$ bei drei verschiedenen Drücken p1, p2, p3 beispielhaft dargestellt. Bei einer nicht selbstverstärkenden Bremse ändert sich die Spannkraft $F_N$ (als strichdoppelpunktierte, waagerechte Linie dargestellt) nicht in Abhängigkeit vom Reibwert $\mu$, lediglich das Bremsmoment $M_{Br}$ weist eine lineare Abhängigkeit auf.

Zur Ermittlung eines erforderlichen Drucks für den Bremszylinder:

Der Bremswunsch des Fahrers wird durch das EBS als ein Abbremsungswunsch interpretiert. Der Sollwert der Regelung ist also die Abbremsung z. Um diese Abbremsung z zu realisieren, muss der erforderliche Bremsdruck *p* ermittelt werden.

Für eine einzelne Bremse gilt:

Unter der Voraussetzung, dass die entsprechende dynamische Radlast oder zumindest die dynamische Achslast bekannt ist, können die Bremskraft pro Rad und das Bremsmoment berechnet werden.

Dynamische Achslast: $\qquad G'$

Dynamische Radlast:

$$G'_{Rad} = \frac{G'}{2}$$

Soll-Abbremsung: $\qquad z$

Bremskraft pro Rad:

$$B = G'_{Rad} \cdot z$$

Dynamischer Reifenhalbmesser: $\qquad r_{dyn}$

Bremsmoment: $\qquad M_{Br} = B \cdot r_{dyn}$

Ausgehend von einem bekannten Reibwert kann nun der, für die Soll-Abbremsung benötigte, eingesteuerte Druck ermittelt werden:

Reibwert Belag - Scheibe: $\qquad \mu$

Mittlerer Reibradius: $\qquad r_m$

Spannkraft:

$$F_N = \frac{M_{Br}}{2 \cdot \mu \cdot r_m}$$

(fortgesetzt)

Keilwinkel der Selbstverstärkungseinrichtung: $\alpha$

Reibwinkel der Selbstverstärkungseinrichtung: $\gamma$

Selbstverstärkungsfaktor:

$$C_{SV} = \frac{1}{1 - \dfrac{\mu}{\tan(\alpha + \gamma)}}$$

Übersetzungsverhältnis des Bremshebels: $i$

Wirkungsgrad der Betätigung: $\eta$

Zylinderkraft:

$$F_A = \frac{F_N}{i \cdot \eta \cdot C_{SV}}$$

Faktor zur Ermittlung des Bremszylinderdrucks: $Y$

Bremszylinderdruck:

$$p = \frac{F_A}{Y}$$

Ansprechdruck des Bremszylinders: $p_{Anspr}$

Einzusteuernder Druck:

$$p_{ein} = p + p_{Anspr}$$

oder:

$$p_{ein} = \frac{G' \cdot z_{soll} \cdot r_{dyn} \cdot \left(1 - \dfrac{\mu}{\tan(\alpha + \gamma)}\right)}{4 \cdot \mu \cdot r_m \cdot Y \cdot i \cdot \eta} + p_{Anspr}$$

Geht man davon aus, dass der mittlere Reibradius, der Faktor Y, das Übersetzungsverhältnis, der Wirkungsgrad, der Keilwinkel und der Reibwinkel der Selbstverstärkungseinrichtung konstant sind, so ergibt sich mit den Faktoren A und B:

$$A = \frac{1}{4 \cdot r_m \cdot Y \cdot i \cdot \eta}$$

$$B = -\frac{1}{\tan(\alpha + \gamma)}$$

$$p_{ein} = z_{soll} \cdot G' \cdot r_{dyn} \cdot A \cdot \left(\frac{1}{\mu} + B\right) + p_{Anspr}$$

Bei einem Nenn- bzw. Auslegungsreibwert ergibt sich:

$$p_{ein,nenn} = z_{soll} \cdot G' \cdot r_{dyn} \cdot A \cdot \left( \frac{1}{\mu_{nenn}} + B \right) + p_{Anspr}$$

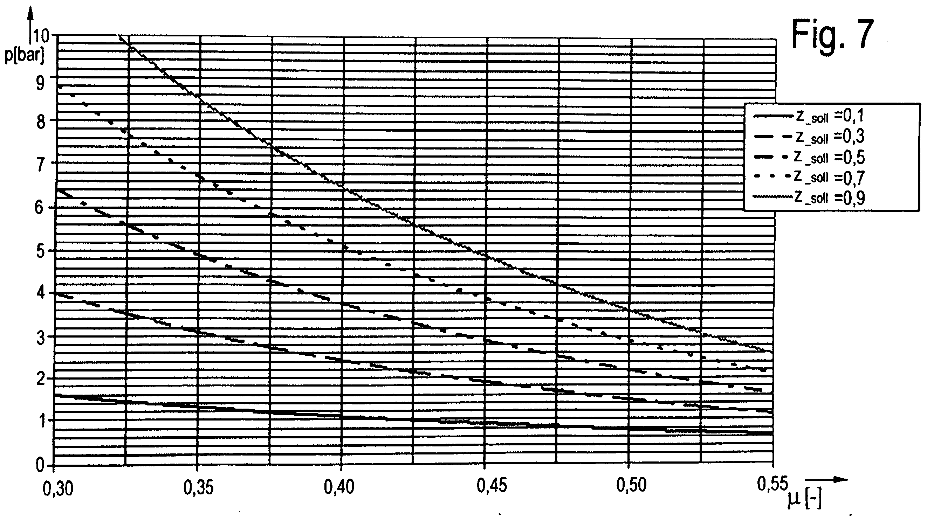

Dieser Zusammenhang ist auch in Fig. 7 zu sehen, welche eine grafische Darstellung von Drücken p in Abhängigkeit von einem Reibwert $\mu$ ist.

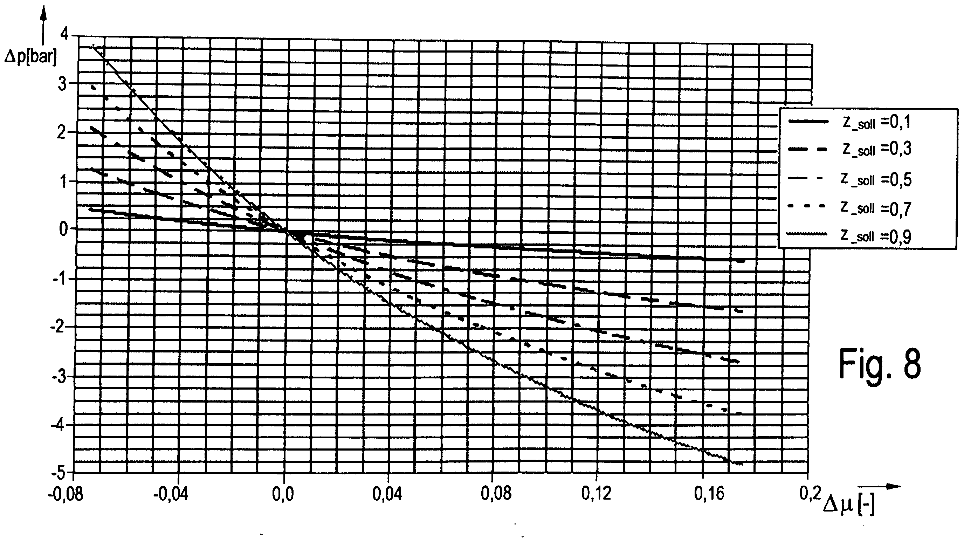

Mit diesem Zusammenhang ist jeder Soll-Verzögerung bei Nennreibwert ein Druck zugeordnet. Bei einer Reibwertabweichung $\Delta\mu$ muss dieser Druck um $\Delta p$ korrigiert werden (siehe Fig. 8 als eine grafische Darstellung von Druckkorrekturen $\Delta p$ in Abhängigkeit von unterschiedlichen Reibwertabweichungen $\Delta\mu$):

$$\Delta p = z_{soll} \cdot G' \cdot r_{dyn} \cdot A \cdot \left( \frac{1}{\mu_{nenn} + \Delta\mu} + B \right) + p_{Anspr} - p_{ein,nenn}$$

Die Ermittlung des aktuellen Reibwerts $\mu$ wird im nun erläutert.

Das Sensorsignal u hat in erster Näherung einen linearen Zusammenhang zur Spannkraft der Bremse. Beim Bremsen wird ein Druck $p_1$ eingesteuert, der ohne Selbstverstärkung zu einem bestimmten Sensorsignal führen würde:

$$p_1 \rightarrow u_{o.SV,1}$$

Diese Kennlinie muss in der Bremsensteuerung hinterlegt sein (siehe weiter unten).

Tatsächlich wird bei der selbstverstärkenden Bremse jedoch im Betrieb ein höheres Signal gemessen (durch die Zusatzspannkraft aus dem Keileffekt, siehe Fig. 5: $F_{SV}$):

$$p_1 \rightarrow u_{tats,1}$$

Der Selbstverstärkungsfaktor beträgt damit:

$$C_{SV} = \frac{u_{tats,1}}{u_{o.SV,1}} = \frac{1}{1 - \dfrac{\mu}{\tan(\alpha + \gamma)}}$$

Der Reibwert wird errechnet durch

$$\mu = \tan(\alpha + \gamma) \cdot \left( 1 - \frac{u_{o.SV,1}}{u_{tats,1}} \right)$$

$$\mu = -\frac{1}{B} \cdot \left( 1 - \frac{u_{o.SV,1}}{u_{tats,1}} \right)$$

Die Ermittlung des Reibwertes kann, je nach erforderlicher Regelgüte, über mehrere Bremsungen ermittelt werden oder auch innerhalb einer einzigen Bremsung mehrmals ausgewertet werden.

Ermittlung von Kennlinien der Scheibenbremse 1.

Das Sensorsignal u hängt im Wesentlichen von der Steifigkeit des Bremssattels 5 ab. Jedoch bewirkt die Steifigkeit und Dicke der Bremsbeläge 4, 4' ein unterschiedliches Verformungsverhalten des Sattels 5. Bei weichen bzw. neuen Belägen 4, 4' wird der Sattelrücken im unteren Bereich deutlich stärker ausgelenkt als oben (aufgrund der Zugstreben-Geometrie) - damit wird ein geringeres Sensorsignal u erfasst als bei verschlissenen bzw. steifen Belägen. Steife Beläge 4, 4' haben durch ihre geringe Nachgiebigkeit eine stärkere Richtwirkung auf den Bremssattel 5. Es ist demnach nötig, das Sensorsignal u in Abhängigkeit von den Bremsbelägen 4, 4' und deren Zustand zu verarbeiten.

Ermittlung des Ansprechpunktes:

Möglichkeit 1: Ermittlung bei einer Bremsung.
Der Druck, der zu einem kleinen, definierten Sensorsignal führt wird als Ansprechdruck definiert $\rightarrow p_{Anspr}$
Möglichkeit 2: Ermittlung im Stand wenn kein Bremswunsch des Fahrers vorliegt.
Hierbei kann die Messung analog zu Möglichkeit 1 jedoch langsamer erfolgen.
Möglichkeit 3: Während einer Bremsung oder im Stand.
Es werden bei zwei verschiedenen Drücken die Signale des Sensors 14 erfasst. Anschließend wird der Ansprechdruck linear extrapoliert.

Ermittlung der "Grundsteifigkeit":

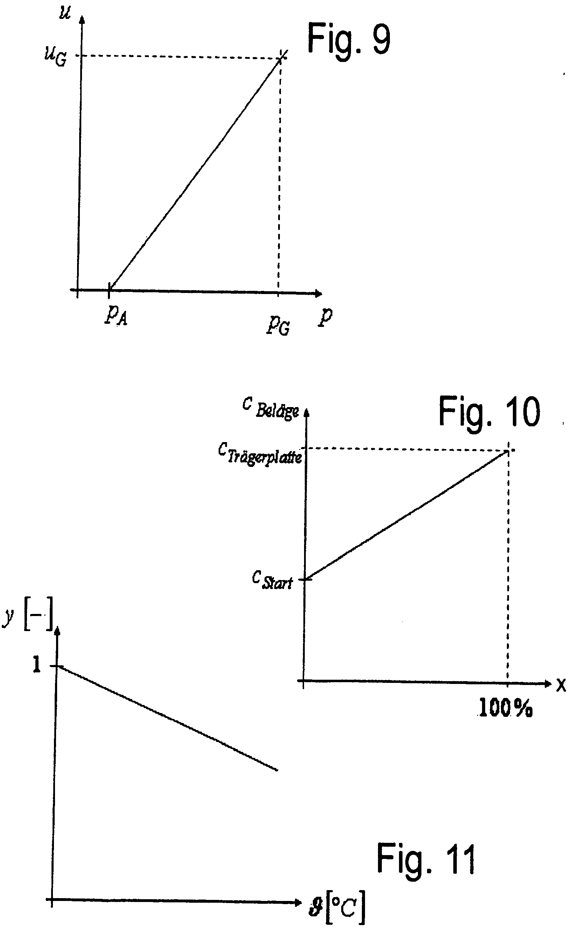

Wie bereits beschrieben hängt das Sensorsignal u auch von der Steifigkeit der Beläge 4, 4' ab. Im Signal-Druck-Diagramm (siehe Fig. 9) kann sich die Steigung der Signalkurve (in erster Näherung eine Gerade) ändern.

Zunächst soll der Zusammenhang für neue, kalte Beläge erfasst werden.

Diese Messung erfolgt im Stand und in der Ebene, da die Selbstverstärkung nicht wirksam werden darf - lediglich die Zylinderkraft soll eine Sattelaufweitung hervorrufen. Die Messung könnte im Werk des Fahrzeugherstellers und nach dem Belagwechsel in der Servicewerkstatt durch eine Art "Initial-Bremsung" erfolgen. Es wird ein bestimmter Druck $p_G$ eingesteuert und das Sensorsignal $u_G$ gemessen.

Damit ist der Signalverlauf $u_{o.SV} = f(p)$ ohne Selbstverstärkung ermittelt.

Evtl. ist auch eine Kennlinienaufnahme am Ende des Montagebandes der Bremse möglich. Hierbei muss allerdings beachtet werden, dass es Abweichungen zwischen Prüfaufbau und realen Einbaubedingungen am Fahrzeug geben kann. Zusätzlich kann das Verhalten der Membranzylinder variieren (v.a. der Ansprechdruck).

$$u_{o.SV} = \frac{u_G}{p_G - p_A} \cdot p - \frac{p_A}{p_G - p_A} \cdot u_G$$

$$m_1 = \frac{u_G}{p_G - p_A}$$

$$b = -\frac{p_A}{p_G - p_A} \cdot u_G$$

$$u_{o.SV} = m_1 \cdot p + b$$

Änderung des Signals durch Verschleiß:

Gesamtsteifigkeit der Bremse:

$$\frac{1}{c_{ges}} = \frac{1}{c_{Sattel}} + \frac{1}{c_{Beläge}}$$

$c_{Sattel}$ wird als Konstante, abhängig vom Bremsentyp, im EBS hinterlegt.

Die Einheit der Steifigkeiten im EBS ist $\frac{Sensorsignal - Einheit}{Druck - Einheit}$, z.B. $1\frac{V}{bar}$. Ohne Verschleiß entspricht $c_{ges}$ der Steigung der Kennlinie "Grundsteifigkeit" $m_1$. Siehe hierzu Fig. 10 als eine grafische Darstellung einer Gesamtsteifigkeit in Abhängigkeit von einem Verschleiß x.

Der Zustand der Beläge kann über einen bereits vorhandenen Verschleißsensor erfasst werden. Damit ist eine Anpassung der Kennlinie wie folgt möglich:

$$c_{Beläge} = \frac{c_{Trägerplatte} - c_{Start}}{100\%} \cdot x[in\%] + c_{Start}$$

mit $c_{Start} = \dfrac{1}{\dfrac{1}{c_{ges}} - \dfrac{1}{c_{Sattel}}}$ Bei komplett verschlissenen Belägen wirkt nur noch die Steifigkeit der Trägerplatte 3, 3' des Reibmaterials.

$c_{Trägerplatte}$ ist als Konstante hinterlegt.

Bei entstehendem Verschleiß gilt also:

$$u_{o.SV, mit\ Verschleiß} = c_{ges} \cdot p + \frac{p_A}{p_G - p_A} \cdot u_G$$

$$u_{o.SV, mit\ Verschleiß} = m_2 \cdot p + b$$

mit $m_2 = c_{ges} = \dfrac{1}{\dfrac{1}{c_{Sattel}} + \dfrac{1}{c_{Beläge}}}$

Berücksichtigung der Temperatureinwirkung:

Wenn im EBS ein Temperaturmodell verwendet wird, kann die Temperatur zusätzlich durch den Faktor y berücksichtigt werden. Dies zeigt Fig. 11 in einem Diagramm des Temperaturfaktors y in Abhängigkeit von einer Temperatur ϑ.

$$m_2 = c_{ges} = \dfrac{1}{\dfrac{1}{c_{Sattel}} + \dfrac{1}{y \cdot c_{Beläge}}}$$

Es wird eine Kennlinie der Bremse ohne wirksame Selbstverstärkung ermittelt. Diese Kennlinie stellt den Zusammenhang zwischen Sensorsignal, und damit Spannkraft der Bremse, und dem eingesteuerten Druck ohne Selbstverstärkung dar.

Basierend auf dieser hinterlegten Kennlinie kann nun durch den Vergleich des Sensorsignals ohne Selbstverstärkung mit dem tatsächlichen Signal der aktuelle Reibwert bestimmt werden.

Mit Hilfe des berechneten Reibwerts kann nun der eingesteuerte Druck für eine bestimmte Soll-Verzögerung bei Reibwertänderungen angepasst werden

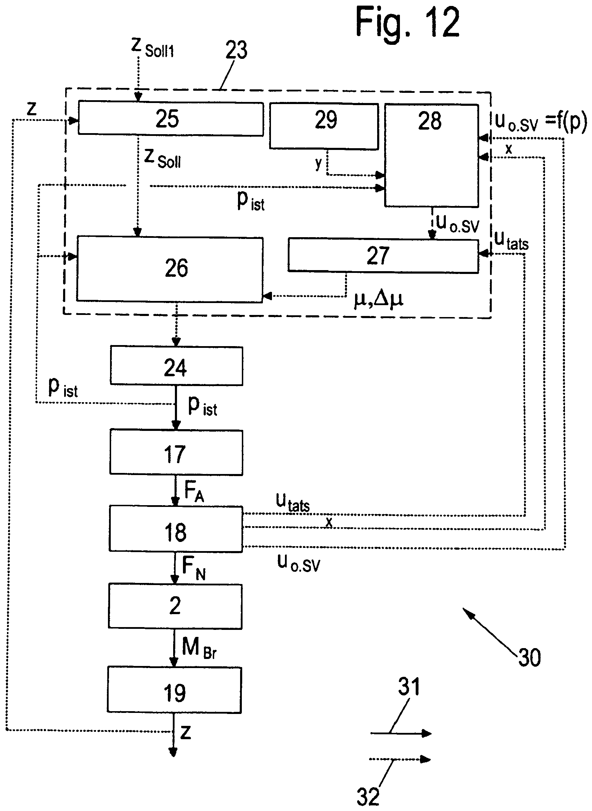

In Fig. 12 sind die wesentlichen Größen und Vorgänge beispielhaft beschrieben, allerdings wurde auf einige Größen verzichtet, um eine bessere Übersichtlichkeit zu gewährleisten (z.B. Signal Rad- bzw. Achslast, Eingangsgrößen Temperaturmodell, etc.). Fig. 12 zeigt ein Blockschaltbild der Regelung des erfindungsgemäßen Verfahrens mit einer Solldruckermittlung.

Der Selbstverstärkungsmechanismus 20 ist der Übersichtlichkeit wegen nicht gezeigt, er ist aber leicht als Bestandteil der Bremseinheit 18 vorstellbar.

Das Steuergerät 23 weist einen Abgleichblock Abbremsung 25 zum Empfang eines Sollabbremswertes $z_{Soll1}$ und des Zustellwertes z und zur Ausgabe eines Zustellsollwertes $z_{soll}$ auf. Ein Ermittlungsblock Solldruck 26 erhält den Zustellsollwert $z_{soll}$, den Istdruckwertes $p_{ist}$ des Druckmoduls 24 und den Reibwert μ bzw. die Reibwertabweichung Δμ und gibt den Solldruckwert $p_{soll}$ an das Druckmodul 24 aus.

Ein Berechnungsblock Reibwert 27 ist zum Berechnen und zur Ausgabe des Reibwertes μ bzw. der Reibwertabweichung Δμ aus einem Vergleich eines aktuellen Sensorsignals $u_{tats}$ mit einem Sensorsignal ohne Selbstverstärkung $u_{o.SV}$ vorgesehen. Weiterhin weist das Steuergerät 23 einen Kennlinienblock Sensorsignal 28 zur Berechnung des Sensorsignals ohne Selbstverstärkung $u_{o.SV}$ anhand einer gespeicherten Kennlinie der Scheibenbremse 1 und aktueller Werte x, y der Scheibenbremse 1 auf. Mit diesen Blöcken oder auch in anderer Konfiguration sind die oben angegebenen Berechnungen durchführbar, um den Solldruck in Abhängigkeit unterschiedlicher Reibwerte zu erzeugen.

Die Erfindung ist nicht auf die oben beschriebenen Ausführungsbeispiele beschränkt. Sie ist im Rahmen der beigefügten Ansprüche modifizierbar.

**Bezugszeichenliste**

| 1 | Scheibenbremse |
|---|---|
| 2 | Bremsscheibe |
| 3, 3' | Bremsbelagträger |
| 4, 4' | Bremsbelag |
| 5 | Bremssattel |
| 6 | Bremssattelinnenseite |
| 7 | Bremssattelaußenseite |
| 8 | Belaghaltebügel |
| 9 | Messarm |
| 10 | Kontaktabschnitt |
| 11 | Kontaktabschnittsfläche |
| 12 | Belaghaltebügelendabschnitt |
| 13 | Belaghaltebügelbefestigung |
| 14 | Sensor |
| 15 | Sensorgehäuse |
| 16 | Messeinrichtung |
| 17 | : |
| 18 | Bremseinheit |
| 19 | Fahrzeugrad |
| 20 | Selbstverstärkungsmechanismus |
| 21 | Differenzbildung |
| 22 | Pedalmodul |
| 23 | Steuergerät |
| 24 | Druckmodul |
| 25 | Abgleichblock Abbremsung |
| 26 | Ermittlungsblock Solldruck |
| 27 | Berechnungsblock Reibwert |
| 28 | Kennlinienblock Sensorsignal |
| 29 | Temperaturmodellblock |
| 30 | Regelung |
| 31 | Energiefluss |
| 32 | Signalfluss |
| $c_{...}$ | Steifigkeit |
| $F_A$ | Zylinderkraft |
| $F_N$ | Spannkraft |
| Fsv | Selbstverstärkungskraft |
| $F_u$ | Kraft |
| $M_{Br}$ | Bremsmoment |
| $p_A$ | Ansprechdruck |
| $p_G$ | Prüfdruck |
| $p_{ist}$ | Istdruck |
| $p_{soll}$ | Solldruck |
| p, $p_{1...3}$ | Druck, Bremszylinderdruck |
| $\Delta p$ | Druckkorrektur |
| u | Sensorsignal |
| $u_G$ | Prüfsensorsignal |
| $u_{o.SV}$ | Sensorsignal ohne Selbstverstärkung |
| $u_{tats}$ | aktuelles Sensorsignal |
| x | Verschleißsignal |
| y | Temperaturfaktor |

| z | Abbremsung, Zustellung |
| $z_{Soll1}$ | Abbremssollwert |
| z_Soll | Sollabbremsung, -zustellung |
| $\mu$ | Reibwert |
| $\Delta\mu$ | Reibwertabweichung $\vartheta$ Temperatur |

**Patentansprüche**

**1.** Verfahren zum Steuern einer druckluftbetätigten Scheibenbremse (1) mit einer Zuspannvorrichtung, die eine Selbstverstärkungseinrichtung aufweist und der ein Steuergerät (23) zur Regelung eines Bremsdrucks (p) zugeordnet ist, mit folgenden Verfahrensschritten:

(1) Empfangen eines Abbremssollwertes ($Z_{Soll1}$);
(2) Ermitteln eines erforderlichen Solldrucks ($p_{soll}$) anhand des Abbremssollwertes ($Z_{Soll1}$);
(3) Ermitteln eines aktuellen Reibwerts ($\mu$) zwischen Bremsbelägen (4, 4') und einer Bremsscheibe (2) der Scheibenbremse (1) und Bilden einer Reibwertabweichung ($\Delta\mu$) des aktuellen Reibwerts ($\mu$) von einem Nennreibwert;
(4) Anpassen des erforderlichen Solldrucks ($p_{soll}$) anhand der Reibwertabweichung ($\Delta\mu$); und
(5) Steuern der Scheibenbremse (1) durch Regeln des Bremsdrucks (p) mit dem so angepassten Solldruck ($p_{soll}$),

wobei der aktuelle Reibwert ($\mu$) durch zumindest einen Bremsvorgang ermittelt oder auch bei einem einzigen Bremsvorgang mehrmals ausgewertet wird,
wobei der aktuelle Reibwert ($\mu$) durch Vergleichen eines aktuellen Sensorsignals ($u_{tats}$) einer Spannkraft ($F_N$) der Scheibenbremse (1) mit einem Sensorsignal ($u_{o.SV}$) der Spannkraft der Scheibenbremse (1) ohne Selbstverstärkung ermittelt wird,
wobei das Sensorsignal ($u_{o.SV}$) anhand zumindest einer gespeicherten Kennlinie der Scheibenbremse (1) ermittelt wird,
wobei die zumindest eine gespeicherte Kennlinie der Scheibenbremse (1) einen Zusammenhang zwischen dem Sensorsignal ($u_{o.SV}$) der Spannkraft der Scheibenbremse (1) ohne Selbstverstärkung und einem Bremsdruck ohne Selbstverstärkung bildet,
wobei die zumindest eine gespeicherte Kennlinie weiterhin eine Abhängigkeit des Sensorsignals ($u_{o.SV}$) von einer Steifigkeit ($c_{Sattel}$) des Bremssattels (5) und Steifigkeit ($c_{Beläge}$) und Verschleiß (x) von Bremsbelägen (4, 4') der Scheibenbremse (1) aufweist,
wobei das Sensorsignal ($u_{o.SV}$) weiterhin anhand aktueller Werte von Steifigkeit ($c_{Beläge}$) und Verschleiß (x) der Bremsbeläge (4, 4') der Scheibenbremse (1) angepasst wird, wobei das Sensorsignal ($u_{o.SV}$) weiterhin anhand aktueller Werte einer Temperatur ($\vartheta$) der Bremsbeläge (4, 4') der Scheibenbremse (1) angepasst wird.

**2.** Verfahren nach Anspruch 1, **dadurch gekennzeichnet, dass** das aktuelle Sensorsignal ($u_{tats}$) anhand einer Erfassung einer Aufweitung eines Bremssattels (5) der Scheibenbremse (1) in Abhängigkeit von der Spannkraft ($F_N$) der Scheibenbremse (1) gebildet wird.

**3.** Verfahren nach einem der vorhergehenden Ansprüche, **dadurch gekennzeichnet, dass** die zumindest eine gespeicherte Kennlinie weiterhin anhand aktueller Werte von Steifigkeit ($c_{Beläge}$) und Verschleiß (x) der Bremsbeläge (4, 4') der Scheibenbremse (1) angepasst wird.

**4.** Verfahren zum Steuern einer Bremsanlage eines Fahrzeugs mit zumindest zwei Rädern auf einer Achse, wobei die zumindest zwei Räder jeweils zumindest eine druckluftbetätigte Scheibenbremse (1) mit Selbstverstärkung, die mittels eines Verfahrens nach einem der vorhergehenden Ansprüche gesteuert wird, aufweisen, wobei bei einem Ausfall eines Ermittelns eines aktuellen Reibwertes ($\mu$) zumindest einer der zumindest zwei druckluftbetätigten Scheibenbremsen (1) der ermittelte aktuelle Reibwert ($\mu$) der anderen der zumindest zwei druckluftbetätigten Scheibenbremsen (1) verwendet wird.

**Claims**

**1.** Method for controlling a pneumatically actuated disc brake (1) with an application device which comprises a self-energising device and to which a control unit (23) for controlling a brake pressure (p) is assigned, the method comprising the following steps:

(1) the reception of a braking target value ($Z_{Soll1}$);
(2) the determination of a required target pressure ($p_{soll}$) from the braking target value ($Z_{Soll1}$);
(3) the determination of a current friction coefficient ($\mu$) between the brake pads (4, 4') and a brake disc (2) of the disc brake (1) and the formation of a friction coefficient deviation ($\Delta\mu$) of the current friction coefficient ($\mu$) from a nominal friction coefficient;
(4) the adaptation of the required target pressure ($p_{soll}$) by means of the friction coefficient deviation ($\Delta\mu$); and
(5) the control of the disc brake (1) by controlling the brake pressure (p) using the thus adapted target pressure ($p_{soll}$),

wherein the current friction coefficient ($\mu$) is determined from at least one braking operation or evaluated several times at a single braking operation,
wherein the current friction coefficient ($\mu$) is determined by comparing a current sensor signal ($u_{tats}$) of a clamping force ($F_N$) of the disc brake (1) to a sensor signal ($u_{o.SV}$) of the clamping force of the disc brake (1) without self-energising,
wherein the sensor signal ($u_{o.SV}$) is determined by means of at least one stored characteristic of the disc brake (1),
wherein the at least one stored characteristic of the disc brake (1) forms a correlation between the sensor signal ($u_{o.SV}$) of the clamping force of the disc brake (1) without self-energising and a brake pressure without self-energising,
wherein the at least one stored characteristic furthermore has a dependence of the sensor signal ($u_{o.SV}$) from a stiffness ($c_{Sattel}$) of the brake calliper (5) and a stiffness ($c_{Beläge}$) and wear (x) of brake pads (4, 4') of the disc brake (1),
wherein the sensor signal ($u_{o.SV}$) is furthermore adapted by means of current values of stiffness ($c_{Beläge}$) and wear (x) of the brake pads (4, 4') of the disc brake (1),
wherein the sensor signal ($u_{o.SV}$) is furthermore adapted by means of current values of a temperature ($\vartheta$) of the brake pads (4, 4') of the disc brake (1).

2. Method according to claim 1, **characterised in that** the current sensor signal ($u_{tats}$) is formed by means of detecting an expansion of a brake calliper (5) of the disc brake (1) as a function of the clamping force ($F_N$) of the disc brake (1).

3. Method according to any of the preceding claims, **characterised in that** the at least one stored characteristic is furthermore adapted by means of current values of stiffness ($c_{Beläge}$) and wear (x) of the brake pads (4, 4') of the disc brake (1).

4. Method for controlling a brake system of a vehicle having at least two wheels on one axle, wherein each of the at least two wheels comprises at least one pneumatically actuated disc brake (1) with a self-energising device, which disc brake (1) is controlled by means of a method according to any of the preceding claims, wherein, at a failure of a determination of a current friction coefficient ($\mu$) of at least one of the at least two pneumatically actuated disc brakes (1), the determined current friction coefficient ($\mu$) of the other of the at least two pneumatically actuated disc brakes (1) is used.

**Revendications**

1. Procédé de commande d'un frein (1) à disque, actionné par de l'air comprimé et ayant un dispositif de serrage, qui a un dispositif d'auto amplification et auquel est associé un appareil (23) de commande pour réguler une pression (p) de frein, comprenant les stades de procédé suivantes :

(1) réception d'une valeur ($Z_{soll1}$) de consigne de freinage;
(2) détermination d'une pression ($p_{soll}$) de consigne nécessaire à l'aide de la valeur ($Z_{soll1}$) de consigne de freinage;
(3) détermination d'une valeur ($\mu$) de friction instantanée entre des garnitures (4, 4') de frein et un disque (2) du frein (1) à disque et formation d'un écart ($\Delta\mu$) de valeur de friction de la valeur ($\mu$) de friction instantanée à une valeur de friction nominale;
(4) adaptation de la pression ($p_{soll}$) de consigne nécessaire à l'aide de l'écart ($\Delta\mu$) de valeur de friction et
(5) commande du frein (1) à disque en réglant la pression (p) de frein par la pression ($p_{soll}$) de consigne ainsi adaptée;

dans lequel on détermine la valeur ($\mu$) de friction instantanée par au moins une opération de freinage ou on l'exploite plusieurs fois aussi dans une opération de freinage unique, la valeur ($\mu$) de friction instantanée étant déterminée en comparant un signal ($u_{tats}$) de capteur instantané d'une force ($F_N$) de serrage du frein (1) à disque à un signal ($u_{o.SV}$) de capteur de la force de serrage du frein (1) à disque, sans auto amplification,

dans lequel on détermine le signal ($u_{o.SV}$) de capteur à l'aide d'au moins une courbe caractéristique mémorisée du frein (1) à disque,

dans lequel la au moins une courbe caractéristique mémorisée du frein (1) à disque forme une relation entre le signal ($u_{o.SV}$) de capteur de la force de serrage du frein (1) à disque, sans auto amplification, et une pression de frein, sans auto amplification,

dans lequel la au moins une courbe caractéristique mémorisée a en outre une dépendance du signal ($u_{o.SV}$) de capteur à une rigidité ($c_{Sattel}$) de l'étrier (5) de frein et à une rigidité ($C_{Beläge}$) et une usure (x) des garnitures (4, 4') du frein (1) à disque,

dans lequel on adapte en outre le signal ($u_{o.SV}$) de capteur à l'aide de valeurs instantanées de rigidité ($c_{Beläge}$) et d'usure (x) des garnitures (4, 4') du frein (1) à disque,

dans lequel on adapte en outre le signal ($u_{o.SV}$) de capteur à l'aide de valeurs instantanées d'une température ($\vartheta$) des garnitures (4, 4') du frein (1) à disque.

2. Procédé suivant la revendication 1, **caractérisé en ce que** l'on forme le signal ($u_{tats}$) de capteur instantané à l'aide d'une détection d'un élargissement d'un étrier (5) du frein (1) à disque, en fonction de la force ($F_N$) de serrage du frein (1) à disque.

3. Procédé suivant l'une des revendications précédentes, **caractérisé en ce que** l'on adapte la au moins une courbe caractéristique mémorisée en outre à l'aide de valeurs instantanées de rigidité ($c_{Beläge}$) et d'usure (x) des garnitures (4, 4') du frein (1) à disque.

4. Procédé de commande d'une installation de freinage d'un véhicule ayant au moins deux roues sur un essieu, les au moins deux roues ayant chacune au moins un frein (1) à disque commandé par de l'air comprimé et ayant une auto amplification, qui est commandée au moyen d'un procédé suivant l'une des revendications précédentes, dans lequel, si une détermination d'une valeur ($\mu$) de friction instantanée d'au moins l'un des au moins deux freins (1) à disque actionné par de l'air comprimé est défaillante, on utilise la valeur ($\mu$) de friction instantanée déterminée de l'autre des au moins deux freins (1) à disque actionné par de l'air comprimé.

Fig. 1

Fig. 2

Fig. 3

Fig. 4

# Fig. 5

$z_{Soll1}$

$z$

22

23

$F_N$   $p_{ist}$

24

$p_{ist}$

17

$F_A$

21   $F_{SV}$

$F_N$

18   20

$F_U$

2

$M_{Br}$

19

$z$

30

31

32

Fig. 6

EP 2 211 071 B1

Fig. 7

EP 2 211 071 B1

Fig. 8

Fig. 9

Fig. 10

Fig. 11

# Fig. 12

**IN DER BESCHREIBUNG AUFGEFÜHRTE DOKUMENTE**

**In der Beschreibung aufgeführte Patentdokumente**

- DE 102006015032 A1
- DE 102006029942 A1